# EUROPEAN PATENT APPLICATION

(11) **EP 2 958 175 A1**
(43) Date of publication of application: **23.12.2015**
(21) Application number: 15172578.5
(22) Date of filing: 17.06.2015
(51) Int. Cl.: H01M 8/02, H01M 8/24

(54) **FUEL CELL**

(30) Priority: 19.06.2014 JP 2014126062
(71) Applicant: Toyota Jidosha Kabushiki Kaisha, Toyota-shi, Aichi-ken 471-8571 (JP)
(72) Inventor: ARAKI, Yasushi, Aichi-ken, 471-8571 (JP); KAJIWARA, Takashi, Aichi-ken, 471-8571 (JP); ITO, Masayuki, Aichi-ken, 471-8571 (JP); SHIBATA, Kazunori, Aichi-ken, 471-8571 (JP)
(74) Representative: Smith, Samuel Leonard

(57) **Abstract**

A fuel cell includes a reinforcing frame (140) that supports an outer edge portion of a membrane electrode assembly, and first and second separator plates (150, 160) that sandwich the membrane electrode assembly and the reinforcing frame. The first separator plate (150) includes a seal line forming protruding portion (152) that is pressed against the second separator plate of an adjacently arranged fuel cell when the fuel cell is stacked, and a first joining portion (154) provided on both sides of the seal line forming protruding portion. The second separator plate (160) includes a receiving portion (162) that is pressed against the seal line forming protruding portion of the first separator plate. The fuel cell includes a slant inhibiting portion (158, 168) provided on at least one side of both sides of the seal line forming protruding portion and the receiving portion.

## Description

### BACKGROUND OF THE INVENTION

### 1. Field of the Invention

The invention relates to a fuel cell, and more particularly, to a structure near a seal line of a separator plate.

### 2. Description of Related Art

Japanese Patent Application Publication No. 2006-54058 (JP 2006-54058 A) describes a fuel cell having a structure that creates a seal by providing a protruding portion on a separator, arranging a polymer elastic layer on a top portion of the protruding portion, and abutting the protruding portion against a polymer membrane.

When a fuel cell stack is formed by stacking together fuel cells (also referred to as "single cells") each having a pair of separator plates with a protruding portion on one of the separator plates, the protruding portion of the separator plate abuts against the separator plate of an adjacent fuel cell. Also, a seal is realized by reaction force between the protruding portion and the separator plate of the adjacent fuel cell. There may be cases in which the protruding portion is misaligned here due to manufacturing tolerances of the separator plates or misalignment of the fuel cells when they are stacked. In this case, a moment is generated in the separator plate, such that the separator plate slants. As a result, sufficient reaction force may be unable to be obtained at the seal line, so a sufficient seal may be unable to be realized.

### SUMMARY OF THE INVENTION

One aspect of the invention relates to a fuel cell that includes a membrane electrode assembly, a reinforcing frame that supports an outer edge portion of the membrane electrode assembly, and a first separator plate and a second separator plate that sandwich the membrane electrode assembly and the reinforcing frame. The first separator plate includes a seal line forming protruding portion that is pressed against the second separator plate of an adjacently arranged fuel cell when the fuel cell is stacked, such that a seal line is formed, and a first joining portion provided on both sides of the seal line forming protruding portion. The second separator plate includes a receiving portion that is pressed against the seal line forming protruding portion of the first separator plate of an adjacently arranged fuel cell, such that the seal line is formed, and a second joining portion provided on both sides of the receiving portion. The fuel cell includes a slant inhibiting portion provided on at least one side of both sides of the seal line forming protruding portion and the receiving portion. With the fuel cell of this aspect, slanting of the separator plates is able to be inhibited by the slant inhibiting portion when stacking fuel cells together to form a fuel cell stack.

The first separator plate may include a projection portion provided between the seal line forming protruding portion and the first joining portion.

A distance between a top portion of the seal line forming protruding portion and the receiving portion may be greater than a thickness of the slant inhibiting portion, in a stacking direction before the fuel cell is stacked. Also, a height from the first joining portion to the top portion of the seal line forming protruding portion may be higher than a height from the first joining portion to the slant inhibiting portion, in the stacking direction before the fuel cell is stacked. According to this structure, when stacking fuel cells, the top portion of the first the seal line forming protruding portion of one fuel cell contacts the receiving portion of an adjacent fuel cell, and then the slant inhibiting portions of the adjacent fuel cells contact each another. The slanting of the separator plates is able to be inhibited by the slant inhibiting portion when stacking fuel cells together to form a fuel cell stack.

The slant inhibiting portion may be a portion of the first separator plate that protrudes in the same direction as a protruding direction of the seal line forming protruding portion, with respect to the first joining portion. According to this structure, the slant inhibiting portion may be formed using the first separator plate.

The slant inhibiting portion may be a portion of the second separator plate that protrudes in the opposite direction from a protruding direction of the seal line forming protruding portion, with respect to the second joining portion. According to this structure, the slant inhibiting portion may be formed using the second separator plate.

A space between the first separator plate and the second separator plate of the slant inhibiting portion may be taken up by a reinforcing frame. According to this structure, the space between the first separator plate and the second separator plate of the slant inhibiting portion is taken up by the reinforcing frame, so the slant inhibiting portion will not easily deform.

The reinforcing frame may extend to an outer restraint member provided on an outside of the fuel cell. According to this structure, the reinforcing frame extends to the outer restraint member, so the fuel cell will not easily become misaligned even when an impact is received.

The slant inhibiting portion may be formed by the reinforcing frame. According to this structure, the slant inhibiting portion is able to be formed using the reinforcing frame.

The slant inhibiting portion may be provided on the opposite side of the first joining portion from the reinforcing frame or on the opposite side of the second joining portion from the reinforcing frame. According to this structure, the slant inhibiting portion is able to be formed using a slant inhibiting member on the first joining portion or the second joining portion.

The fuel cell may include a dam provided on the opposite side of the first joining portion from the reinforcing frame, or on the opposite side of the second joining portion from the reinforcing frame. According to this structure, the dam is provided in addition to the slant inhibiting portion, so side flow in which fluid flows on the opposite side of the first joining portion from the reinforcing frame, or on the opposite side of the second joining portion from the reinforcing frame, able to be inhibited.

The dam may be arranged farther toward the membrane electrode assembly side than the seal line forming protruding portion. According to this structure, the slant inhibiting member is arranged farther toward the membrane electrode assembly side than the seal line forming protruding portion, so the slant inhibiting member is able to be used as a dam.

The invention is able to be realized in a variety of modes. For example, aside from a manufacturing method of a fuel cell stack, the invention may also be realized by a mode such as a fuel cell stack or a manufacturing method of a fuel cell separator plate.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a view showing a frame format of the exterior of a fuel cell stack according to a first example embodiment of the invention;
FIG. 2 is a view of a reinforcing frame and a membrane electrode assembly according to the first example embodiment;
FIG. 3 is a view of a first separator according to the first example embodiment;
FIG. 4 is a view of a cross-section near a seal line of the fuel cell according to the first example embodiment;
FIG. 5 is a view of a state in which fuel cells of the example embodiment are stacked in proper alignment according to the first example embodiment;
FIG. 6 is a view of a state in which fuel cells of the example embodiment are stacked misaligned according to the first example embodiment;
FIG. 7 is a view of a state in which fuel cells of a comparative example are stacked misaligned;
FIGS. 8A to 8D are views of other configuration examples of an area near the protruding portion of the fuel cell according to a modified example of the first example embodiment;
FIGS. 9A to 9C are views of other configuration examples of an area near the protruding portion of the fuel cell according to a modified example of the first example embodiment;
FIG. 10 is a view of an area near a protruding portion according to a second example embodiment of the invention;
FIGS. 11A to 11D are views of an area near a protruding portion according to a third example embodiment of the invention;
FIGS. 12A to 12D are views of the structure in a region where two seal lines are lined up according to a fourth example embodiment of the invention;
FIG. 13 is a view of a fuel cell stack according to a fifth example embodiment of the invention;
FIG. 14 is a view of an outer edge portion of a fuel cell stack having an intermediate layer;
**FIG. 15** is a view of an outer edge portion of a fuel cell stack of a comparative example having an intermediate layer;
FIG. 16 is a view of an outer edge portion of a fuel cell stack of another comparative example having an intermediate layer;
FIGS. 17A and 17B are views of a modified example of the fifth example embodiment;
FIG. 18 is a plan view of a reinforcing frame in FIG. 17A;
FIG. 19 is a view of a structure for providing the intermediate layer at only four corners of the reinforcing frame;
FIG. 20 is a view of a first separator plate according to a sixth example embodiment of the invention;
FIGS. 21A and 21B are views of a cross-section when a fuel cell is cut along a line 20A - 20A and a line 20B - 20B in FIG. 20;
FIGS. 22A to 22C are views of examples of a dam shape; and
FIG 23 is a view of a modified example of the sixth example embodiment.

### DETAILED DESCRIPTION OF EMBODIMENTS

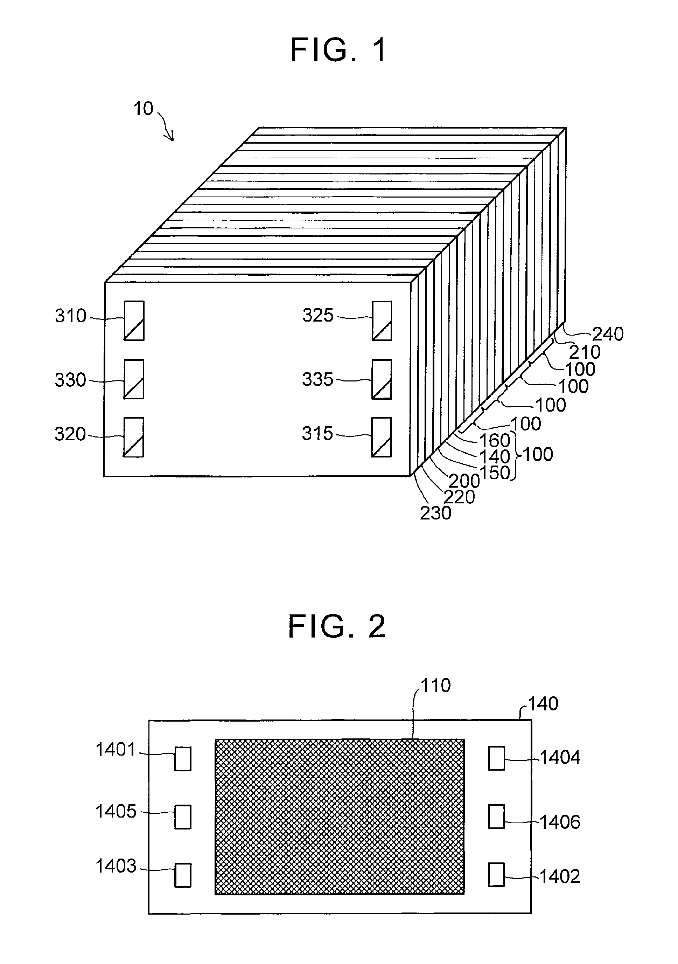

First example embodiment: FIG. 1 is a view showing a frame format of the exterior of a fuel cell stack 10. This fuel cell stack 10 includes fuel cells 100 (also referred to as "single cells"), terminal plates 200 and 210, an insulating plate 220, and end plates 230 and 240. Each fuel cell 100 includes a reinforcing frame 140, a first separator plate 150, and a second separator plate 160. The reinforcing frame 140 is a frame-shaped member made of resin, which has a membrane electrode assembly (MEA) inside of it. The reinforcing frame 140 is sandwiched between the first separator plate 150 and the second separator plate 160. A plurality of these fuel cells 100 are provided stacked together. The terminal plates 200 and 210 are arranged one on each end of the stacked fuel cells 100, and are used to extract voltage and current from the fuel cells 100. The insulating plate 220 is arranged to the outside of the terminal plate 200. Depending on the fixed positions of the fuel cell stack 10 and the body of the vehicle within which the fuel cell stack 10 is mounted, an insulating plate may also be arranged to the outside of the terminal plate 210. The end plates 230 and 240 are arranged one on each side of the fuel cell stack 10 to fasten the fuel cells 100, the terminal plates 200 and 210, and the insulating plate 220.

The fuel cells 100, the terminal plate 200, the insulating plate 220, and the end plate 230 each have a plurality of openings. These openings are communicated together such that manifolds 310, 315, 320, 325, 330, and 335 are formed. The manifold 310 is used to supply oxidant gas to the fuel cells 100, and thus is also referred to as an "oxidant gas supply manifold 310". Hereinafter, the manifolds 315, 320, 325, 330, and 335 are also referred to as an "oxidant gas discharge manifold 315", a "fuel gas discharge manifold 320", a fuel gas supply manifold 325", a "coolant supply manifold 330", and a "coolant discharge manifold 335", respectively, for their respective roles.

FIG. 2 is a view of the reinforcing frame 140 and a membrane electrode assembly (MEA) 110. The reinforcing frame 140 has a generally rectangular frame-shape made of resin. The membrane electrode assembly 110 is supported in the center portion of the reinforcing frame 140. The membrane electrode assembly includes an electrolyte membrane that conducts protons, and a catalyst layer formed on both sides of the electrolyte membrane. A membrane electrode gas diffusion layer assembly (MEGA) may also be used instead of the membrane electrode assembly 110. The membrane electrode gas diffusion layer assembly has a structure that also includes a gas diffusion layer above the catalyst layer of the membrane electrode assembly 110. Openings 1401 to 1406 are open in a side facing the reinforcing frame 140. These openings 1401 to 1406 are used to form the manifolds 310, 315, 320, 325, 330, and 335 (FIG. 1).

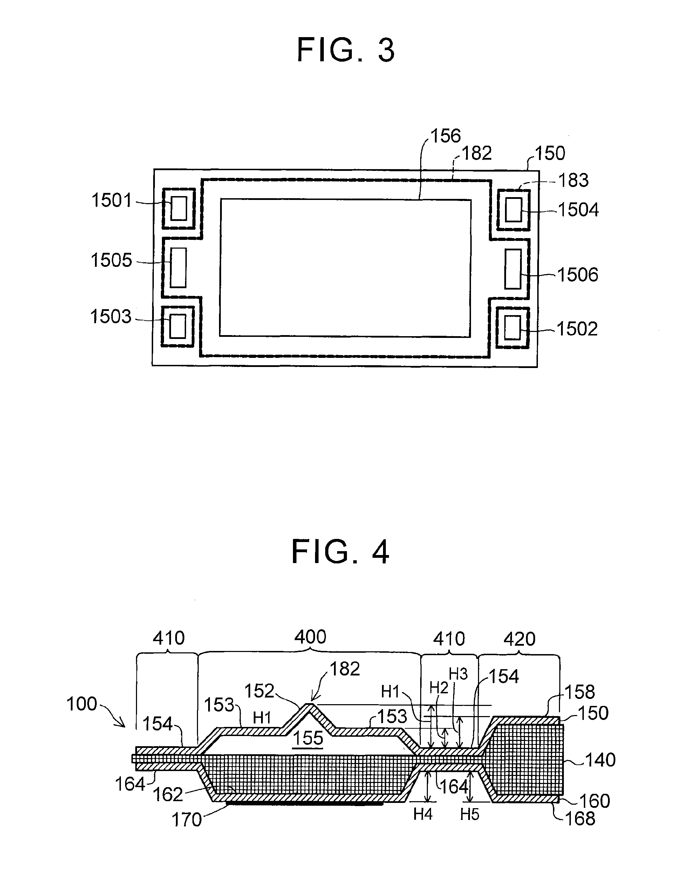

FIG. 3 is a view of the first separator plate 150. The first separator plate 150 is a generally rectangular plate-like member made of metal. Openings 1501 to 1506 are open in the side facing the first separator plate 150. These openings 1501 to 1506 are used to form the manifolds 310, 315, 320, 325, 330, and 335 (FIG. 1). The first separator plate 150 includes a flow path forming portion 156 that has a patterned indented shape in the center portion. The membrane electrode assembly 110 side of the flow path forming portion 156 is a region through which reaction gas flows, and the side of the flow path forming portion 156 that is opposite the membrane electrode assembly 110 is a region through which coolant flows. The first separator plate 150 includes a first seal line 182 around the openings 1501 to 1506. The first seal line 182 is formed by a seal line forming protruding portion 152 formed on the first separator plate 150 being pressed against an adjacent second separator plate 160, which will be described later. Also, a second seal line 183 is formed surrounding the openings 1505 and 1506, and the flow path forming portion 156. The second seal line 183 is also similarly formed by the seal line forming protruding portion 152 formed on the first separator plate 150 being pressed against an adjacent second separator plate 160.

FIG. 4 is a view of a cross-section of an area near the first seal line 182 of the fuel cell. The fuel cell 100 includes an elastic deformation portion 400, a joining portion 410, and a slant inhibiting portion 420, as the structure near the first seal line 182.

The elastic deformation portion 400 includes the seal line forming protruding portion 152 formed on the first separator plate 150, projection portions 153 formed one on each side of the seal line forming protruding portion 152, a receiving portion 162 formed on the second separator plate 160, the reinforcing frame 140, and a rubber sheet 170. The seal line forming protruding portion 152 has a generally triangular shape that protrudes toward an adjacent fuel cell 100 (i.e., upward in the drawing). The projection portion 153 has a shape that protrudes in the same direction as the seal line forming protruding portion 152. Therefore, a deformable space 155 is formed between the projection portion 153 and the reinforcing frame 140. The seal line forming protruding portion 152 and the projection portion 153 elastically deform toward the reinforcing frame 140 when force that compresses the fuel cell 100 in the stacking direction is applied when the fuel cells 100 are being stacked. The receiving portion 162 has a shape that protrudes in the opposite direction from the protruding direction of the seal line forming protruding portion 152 (i.e., downward in the drawing). The space between the receiving portion 162 and the reinforcing frame 140 is full of resin that forms the reinforcing frame 140. This reinforcing frame 140 inhibits deformation of the receiving portion 162. The rubber sheet 170 is arranged on a top portion of the receiving portion 162. The rubber sheet 170 serves as a seal layer when the seal line forming protruding portion 152 contacts the receiving portion 162 and forms the seal line.

One joining portion 410 is provided on each end of the elastic deformation portion 400. The joining portion 410 includes a first joining portion 154 formed on the first separator plate 150, a second joining portion 164 formed on the second separator plate 160, and the reinforcing frame 140. The first joining portion 154 has a flat shape that joins with the reinforcing frame 140, and the second joining portion 164 also has a flat shape that joins with the reinforcing frame 140. The joining portion 410 functions as a spring fulcrum when the joining portion 410 elastically deforms.

The slant inhibiting portion 420 is provided on the opposite side of the joining portion 410 from the elastic deformation portion 400, such that the joining portion 410 sandwiched between the elastic deformation portion 400 and the slant inhibiting portion 420. The slant inhibiting portion 420 includes a slant inhibiting protruding portion 158 formed on the first separator plate 150, a slant inhibiting protruding portion 168 formed on the second separator plate 160, and the reinforcing frame 140. The slant inhibiting protruding portion 158 has a shape that protrudes in the same direction as the seal line forming protruding portion 152, and the slant inhibiting protruding portion 168 has a shape that protrudes in the same direction as the protrusion of the receiving portion 162. In the slant inhibiting portion 420, the reinforcing frame 140 fills the space between the slant inhibiting protruding portion 158 and the slant inhibiting protruding portion 168.

Regarding order in terms of size of a height H1 from the first joining portion 154 of the first separator plate 150 to the top portion of the seal line forming protruding portion 152, a height H2 from the first joining portion 154 to the projection portion 153, and a height H3 from the first joining portion 154 to the slant inhibiting protruding portion 158, the height H1 to the top portion of the seal line forming protruding portion 152 is the greatest, the height H3 to the slant inhibiting protruding portion 158 is the next greatest, and the height H2 to the projection portion 153 is the third greatest. A height H4 from the second joining portion 164 of the second separator plate 160 to the top portion of the receiving portion 162 may be the same as a height H5 from the second joining portion 164 to the top portion of the slant inhibiting protruding portion 168, or the height H5 may be greater than the height H4. However, if the height H5 is greater than the height H4, the height from the top portion of the slant inhibiting protruding portion 168 to the top portion of the slant inhibiting protruding portion 158 must be less than the height from the top portion of the receiving portion 162 to the top portion of the seal line forming protruding portion 152. The relationships between the heights H1 to H5 are the relationships before the fuel cells 100 are stacked.

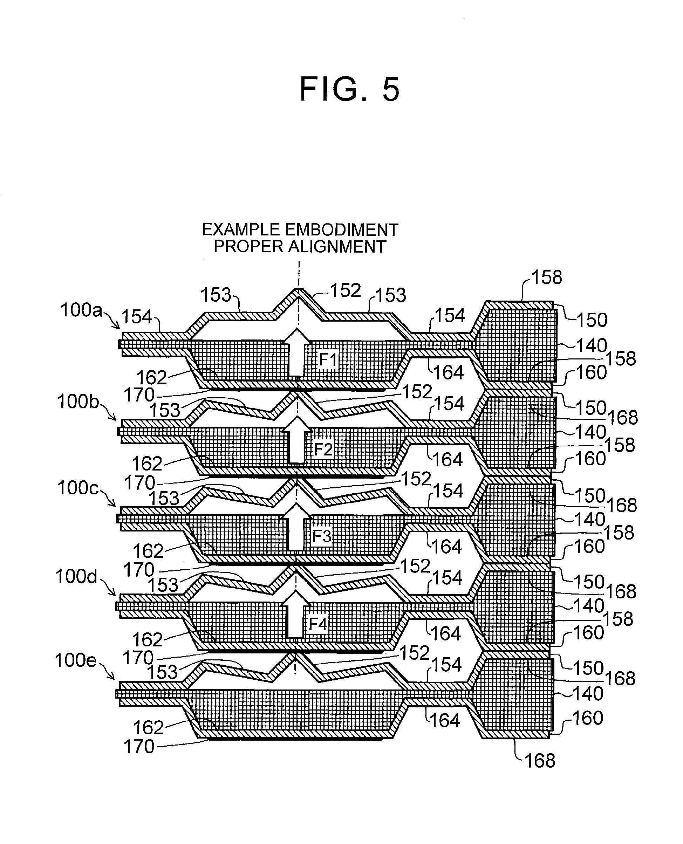

FIG. 5 is a view of the state in which fuel cells of the example embodiment are stacked in proper alignment. Here, five fuel cells 100a to 100e are stacked. When clamping force that fastens the fuel cell stack 10 (FIG. 1) is received, the receiving portion 162 of the fuel cell 100a receives a force F1 from the seal line forming protruding portion 152 of the fuel cell 100b that is contacting it. At this time, the seal line forming protruding portion 152 and the projection portion 153 receive a reaction force F1 from a receiving portion 162 of the fuel cell 100a by the law of action and reaction, and thus elastically deform toward the reinforcing frame 140. From the force F1 and the reaction force thereof, the first seal line 182 (FIG. 3) is formed between the seal line forming protruding portion 152 and the receiving portion 162. A seal line is also similarly formed by forces F2 to F4 and reaction forces thereof, between the seal line forming protruding portions 152 of the fuel cells 100c to 100e and the receiving portions 162 of the fuel cells 100b to 100d. Here, when the fuel cells 100a to 100e are all in proper alignment, the forces F1 to F4 are all on a single straight line so a moment that acts to slant the fuel cells 100 is not generated.

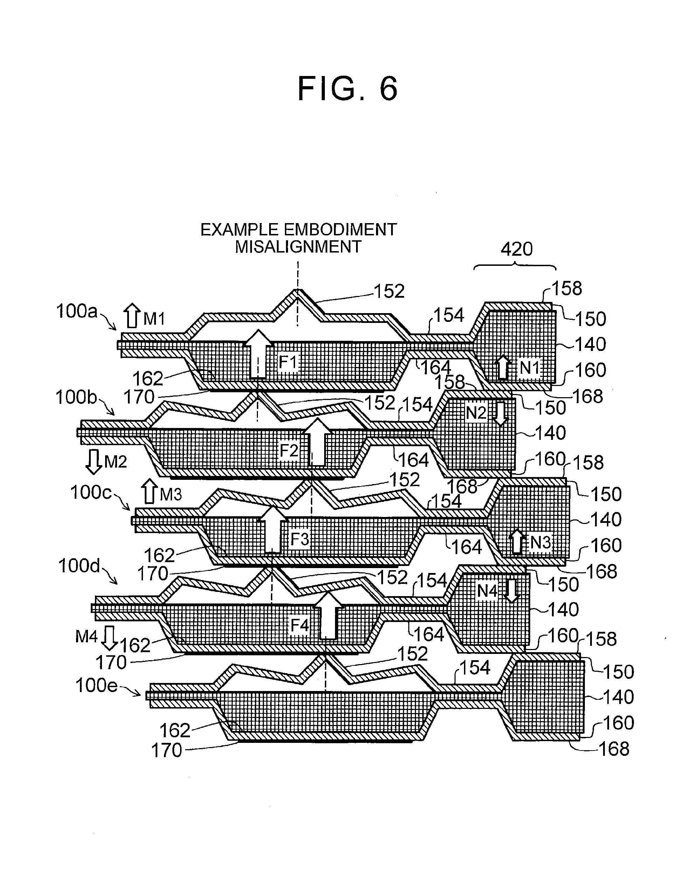

FIG. 6 is a view of a state in which fuel cells of the example embodiment are stacked misaligned. Similar to the case in FIG. 5, five fuel cells 100a to 100e are stacked. In FIG. 6, the fuel cell 100a is misaligned to the right in the drawing with respect to the fuel cell 100b. Therefore, when the clamping force that fastens the fuel cell stack 10 (FIG. 1) is received and the force F1 is received from the seal line forming protruding portion 152 of the fuel cell 100b that is contacting the receiving portion 162 of the fuel cell 100a, the receiving portion 162 of the fuel cell 100a receives a moment M1 in the clockwise direction. However, the slant inhibiting protruding portion 168 of the fuel cell 100a receives resistance N1 from the slant inhibiting protruding portion 158 of the fuel cell 100b, so the moment M1 in the clockwise direction is cancelled out, and as a result, the fuel cell 100 does not slant. Similarly, the fuel cell 100b receives a moment M2 in the counterclockwise direction, but receives resistance N2 from the slant inhibiting protruding portion 168 of the fuel cell 100a, so the moment M2 in the counterclockwise direction is cancelled out, and as a result, the fuel cell 100b does not slant. The slant inhibiting portion 420 (i.e., the slant inhibiting protruding portion 158 and the slant inhibiting protruding portion 168) generates resistance against the moment, and will not let the fuel cell 100b slant. The fuel cells 100c and 100d are also similar.

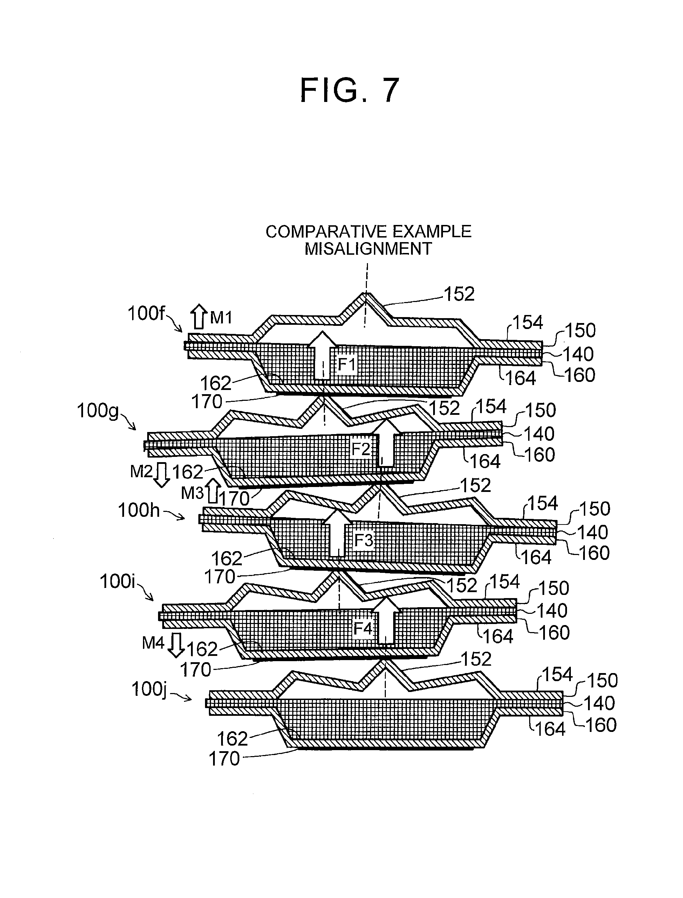

FIG. 7 is a view of a state in which fuel cells of a comparative example are stacked misaligned. Fuel cells 100f to 100j of the comparative example are not provided with the slant inhibiting portion 420 (i.e., the slant inhibiting protruding portion 158 of the first separator plate 150 and the slant inhibiting protruding portion 168 of the second separator plate 160). The amount and orientation of the misalignment (i.e., offset) of the fuel cells 100f to 100j in FIG. 7 are the same as the amount and orientation of the misalignment (i.e., offset) of the fuel cells 100a to 100e in FIG. 6. When the receiving portion 162 of the fuel cell 100f receives the force F1 from the seal line forming protruding portion 152 of the fuel cell 100g, it receives the moment M1 in the clockwise direction. Here, the fuel cell 100f of the comparative example is not provided with the slant inhibiting protruding portion 168, and the fuel cell 100g is not provided with the slant inhibiting protruding portion 158. Therefore, the resistance N1 to counteract the moment M1 is not generated, so the fuel cell 100f slants in the clockwise direction. Similarly, the fuel cells 100g and 100i slant in the counterclockwise direction, and the fuel cell 100h slants in the clockwise direction.

Hereinafter, as described above, in this example embodiment, the fuel cell 100 is provided with the slant inhibiting portion 420 (i.e., the slant inhibiting protruding portions 158 and 168), so even if the fuel cells 100 are misaligned when they are stacked and a moment is generated in the fuel cells 100, the slant inhibiting protruding portion 158 and the slant inhibiting protruding portion 168 of the slant inhibiting portion 420 will contact each other and counteract the moment. As a result, the fuel cells 100 are less likely to slant. The height H3 from the first joining portion 154 to the top portion of the slant inhibiting protruding portion 158 before the fuel cells 100 are stacked is preferably higher than the height H2 from the first joining portion 154 to the projection portion 153, and lower than the height H1 from the first joining portion 154 to the top portion of the seal line forming protruding portion 152 (see FIG. 4). The height H5 from the second joining portion 164 to the slant inhibiting protruding portion 168 may be the same height as the height H4 from the second joining portion 164 to the receiving portion 162 (see FIG. 4). As a result, when the fuel cells 100 are being stacked together, first, the seal line forming protruding portion 152 of the first separator plate 150 contacts the receiving portion 162 of the second separator plate 160 of the adjacent fuel cell, and then the slant inhibiting protruding portion 158 contacts the slant inhibiting protruding portion 168, so the moment is able to be counteracted. The relationships between the heights H1 to H5 described above are the relationships before the fuel cells 100 are stacked, and when the fuel cells are compressed in the stacking direction, the relationships between the heights H1 to H5 change according to the compression force.

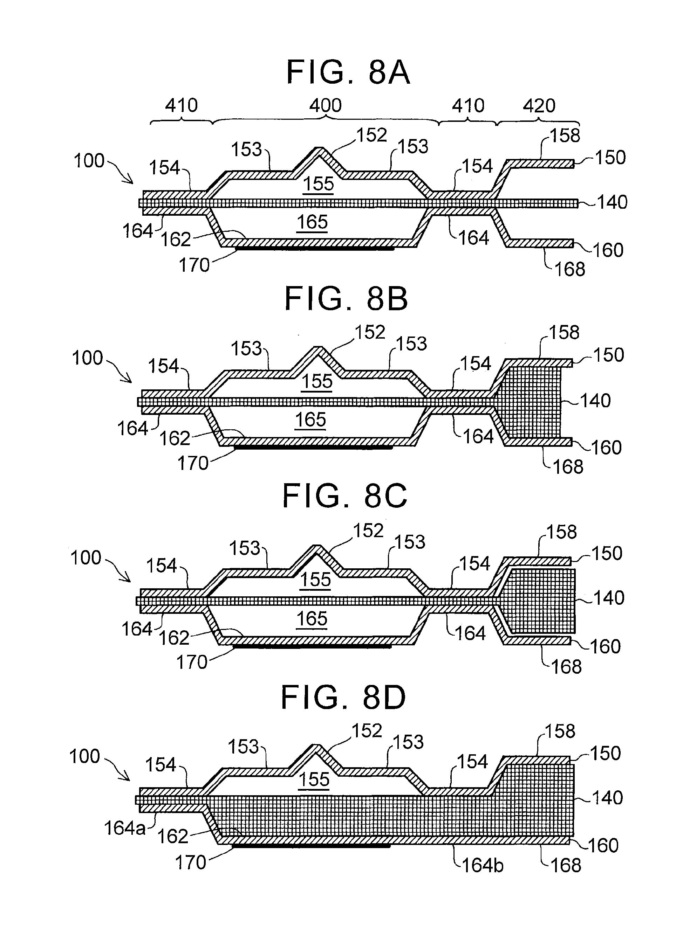

FIGS. 8A to 8D are views of another configuration example of the area near the seal line forming protruding portion 152 of the fuel cell 100. The structure in the example shown in FIG. 8A differs from the structure shown in FIG. 4 in that the space between the slant inhibiting protruding portion 158 and the reinforcing frame 140, and space between the slant inhibiting protruding portion 168 and the reinforcing frame 140, of the slant inhibiting portion 420, is not full of resin. The first separator plate 150 and the second separator plate 160 are made of metal, for example, and the slant inhibiting protruding portions 158 and 168 are rigid. Therefore, even if the space between the slant inhibiting protruding portion 158 and the reinforcing frame 140, and the space between the slant inhibiting protruding portion 168 and the reinforcing frame 140, is not full of resin, resistance is generated by the slant inhibiting protruding portion 158 contacting the slant inhibiting protruding portion 168, so the moment can be counteracted. When these spaces are full of resin as shown in FIG. 4, the rigidity becomes even higher, so deformation of the slant inhibiting protruding portion 158 and the slant inhibiting protruding portion 168 from the pressure is more easily counteracted. Also, in the example shown in FIG. 8A, the deformable space 165 is provided between the receiving portion 162 and the reinforcing frame 140, so the receiving portion 162 is also able to be made to function as an elastic deformation portion.

In the example shown in FIG. 8B, the space between the slant inhibiting protruding portion 158 and the reinforcing frame 140 of the first separator plate 150, and the space between the slant inhibiting protruding portion 168 and the reinforcing frame 140 in FIG. 8A, are full of resin, but the resin does not extend all the way to the right end of the slant inhibiting protruding portion 158 of the first separator plate 150 nor all the way to the right end of the slant inhibiting protruding portion 168 of the second separator plate 160. Even if resin does not extend all the way up to the right end of the first separator plate 150 nor all the way up to the right end of the second separator plate 160 in this way, deformation of the slant inhibiting protruding portion 158 and the slant inhibiting protruding portion 168 due to the pressure during stacking is still able to be counteracted.

In the example shown in FIG. 8C, the space, except for a small gap, between the slant inhibiting protruding portion 158 of the first separator plate 150 and the reinforcing frame 140 is full of resin. Similarly, the space, except for a small gap, between the slant inhibiting protruding portion 168 of the second separator plate 160 and the reinforcing frame 140 is full of resin. In this case, even if the slant inhibiting protruding portion 158 and the slant inhibiting protruding portion 168 deform slightly from the pressure during stacking, the reinforcing frame 140 is able to be inhibited from deforming any more.

FIG. 8D is a view of a structure in which a height from a second joining portion 164a on the left side of the receiving portion 162 to the receiving portion 162, a height from the second joining portion 164a to the slant inhibiting protruding portion 168, and a height from the second joining portion 164a to a second joining portion 164b between the receiving portion 162 and the slant inhibiting protruding portion 168, are all the same, and furthermore, the receiving portion 162, the second joining portion 164b, the slant inhibiting protruding portion 168, and the reinforcing frame 140 are all full of resin. With this kind of structure as well, during stacking, first the seal line forming protruding portion 152 contacts the receiving portion 162 of an adjacent single cell (fuel cell 100), and then the slant inhibiting protruding portion 158 contacts the slant inhibiting protruding portion 168 of the adjacent single cell (fuel cell 100), so the moment is able to be counteracted. In this way, the shape of the slant inhibiting portion of the second separator plate 160 does not need to be a protruding shape.

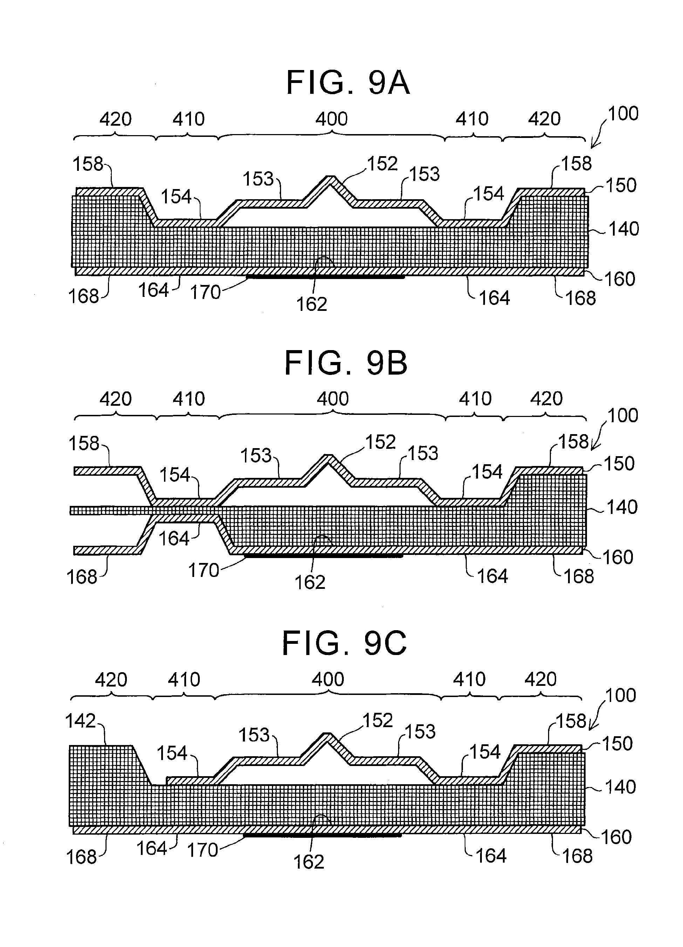

FIGS. 9A to 9C are views of other configuration examples of an area near the seal line forming protruding portion 152 of the fuel cell 100. In the structure shown in FIG. 9A, a structure similar to the structure of the slant inhibiting portion 420 shown in FIG. 8D is also provided on the left side of the seal line forming protruding portion 152, the projection portion 153, and the receiving portion 162. The second separator plate 160 is flat. In this way, the slant inhibiting portion 420 may also be provided on both sides of the seal line forming protruding portion 152 and the projection portion 153. The structure shown in FIG. 9B is a structure in which the structure of the slant inhibiting portion 420 in FIG. 8A has been added to the left side of the structure in FIG. 8D. As shown in FIG. 9B, the structures of the two slant inhibiting portions 420 provided sandwiching the seal line forming protruding portion 152 and the projection portion 153 do not have to be the same. In FIG. 9C, the slant inhibiting protruding portion 158 on the left side is omitted, and instead, the reinforcing frame 140 is formed thick to the same height as the slant inhibiting protruding portion 158 on the right side. By making the reinforcing frame 140 thick instead of providing the slant inhibiting protruding portion 158 in this way, the reinforcing frame 140 may be made to function as the slant inhibiting portion 420. In the modes shown in FIGS. 9A to 9C, the moment need only be counteracted using at least one of the two slant inhibiting portions 420, so the fuel cell 100 is able to be even less susceptible to slanting. With the structure shown in FIG. 9C, the reinforcing frame 140 on the left side is able to be made to function as the slant inhibiting portion 420 by being made thick, but the slant inhibiting portion 420 may also be formed by arranging another member (a slant inhibiting member) on the reinforcing frame 140, instead of changing the thickness of the reinforcing frame 140.

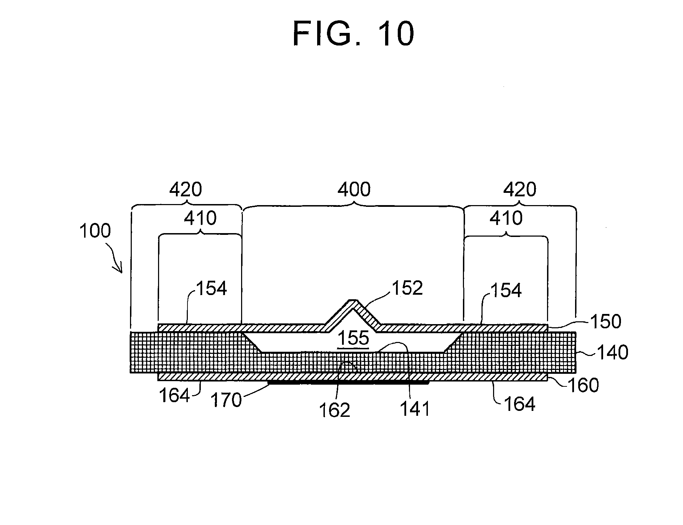

Second example embodiment: FIG. 10 is a view of the area near the seal line forming protruding portion 152 according to a second example embodiment of the invention. With the first separator plate 150 of the first example embodiment, the slant inhibiting portion 420 is provided on the opposite side of the joining portion 410 from the elastic deformation portion 400, such that the joining portion 410 sandwiched between the elastic deformation portion 400 and the slant inhibiting portion 420. In the second example embodiment, the joining portion 410 also functions as the slant inhibiting portion 420. That is, the height from the second separator plate 160 to the first separator plate 150 at the joining portion 410 is the same as the height from the second separator plate 160 to the first separator plate 150 at the slant inhibiting portion 420, and the space between the first separator plate 150 and the second separator plate 160 at the joining portion 410 and the slant inhibiting portion 420 is taken up by the reinforcing frame 140. There is no step between the receiving portion 162 and the second joining portion 164. Also, at the elastic deformation portion 400, a recessed portion 141 is provided in the reinforcing frame 140, such that a deformable space is provided between the first separator plate 150 and the recessed portion 141 of the reinforcing frame 140, in order to form a spring structure. In the second example embodiment, the slant inhibiting portion 420 also serves as the joining portion 410, so the area of the fuel cell 100 is able to be smaller.

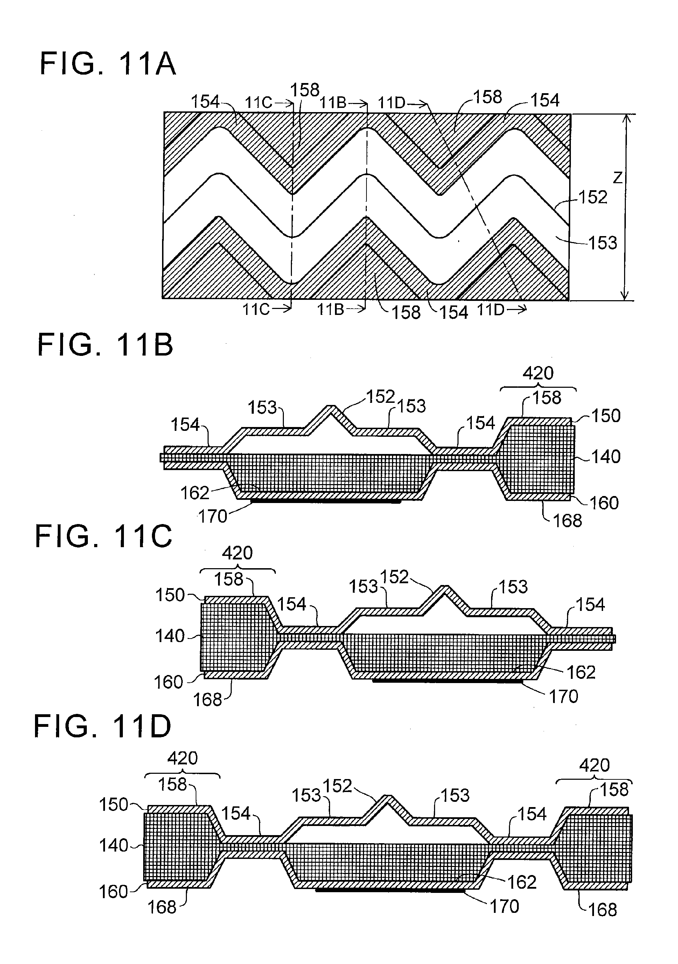

Third example embodiment: FIGS. 11A to 11D are views of the structure near the seal line forming protruding portion 152 according to a third example embodiment of the invention. FIG. 11A is a view, from the stacking direction, of the structure near the seal line forming protruding portion 152 of the fuel cell 100, and FIGS. 11B to 11D are views of cross-sections when the fuel cell 100 shown in FIG. 11A is cut along line 11B - 11B, line 11C - 11C, and line 11D - 11D, respectively. The fuel cell 100 of the third example embodiment includes a seal line forming protruding portion 152 that zigzags or meanders in a wave shape, as shown in FIG. 11A. The slant inhibiting protruding portion 158 is arranged alternately from side to side along a zigzag line or a wavy meandering line. In the cross-section in FIGS. 11B and 11C, the slant inhibiting portion 420 appears to be present only on one side of the seal line forming protruding portion 152, but in the cross-section shown in FIG. 11D, the slant inhibiting portion 420 is present on both sides of the seal line forming protruding portion 152. Therefore, the moment need only be counteracted by at least one of the two slant inhibiting portions 420, so the fuel cell 100 is even less susceptible to slanting. Here, a seal width Z in the vertical direction in FIG. 11A is almost the same as when the slant inhibiting portion 420 is only present on one side of the seal line forming protruding portion 152. When the slant inhibiting portion 420 is provided on both sides of the seal line forming protruding portion 152, the seal width Z is that much larger, but by employing the structure illustrated in the third example embodiment, a similar effect as that obtained by providing the slant inhibiting portion 420 on both sides of the seal line forming protruding portion 152 is able to be obtained without increasing the seal width Z.

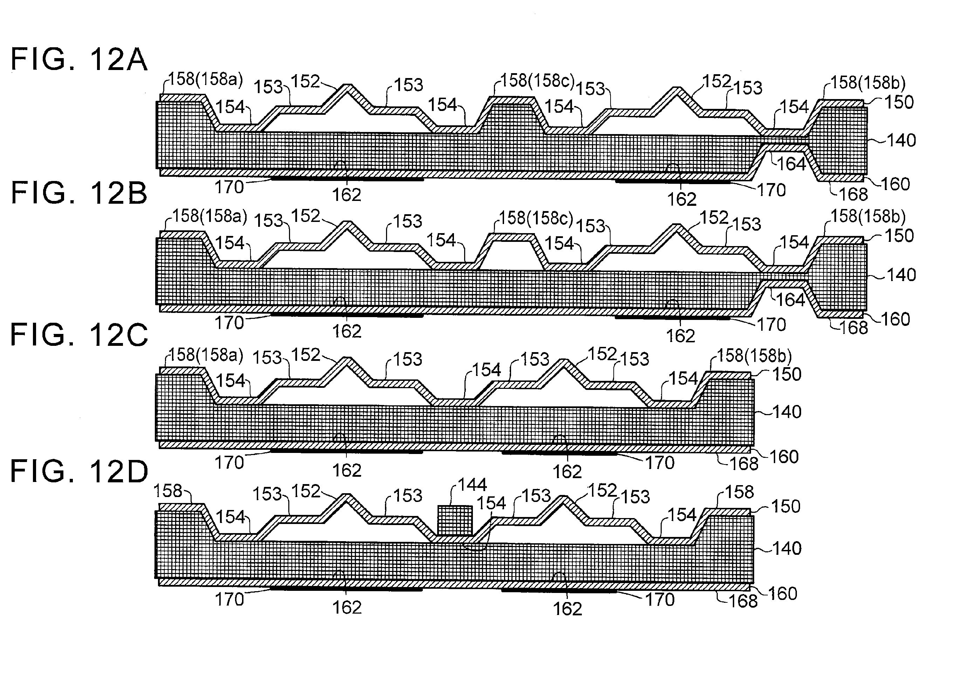

Fourth example embodiment: FIGS. 12A to 12D are views of the structure in a region where two seal lines are lined up. The region where two seal lines are lined up exists at a portion around the openings 1501 to 1506 in FIG. 3, for example. In this case, as shown in FIGS. 12A and 12B, the slant inhibiting protruding portion 158 (158a to 158c) may be provided in three locations, i.e., on each side of the two seal line forming protruding portions 152 that form the seal line (such that the two seal line forming protruding portions 152 are sandwiched in between), and between the two seal line forming protruding portions 152. In this case, slanting of the fuel cell 100 is able to be inhibited by using the slant inhibiting protruding portions 158 (158a and 158b) to generate resistance against the moment that tries to slant the fuel cell 100. Therefore, the slant inhibiting protruding portion 158 (158c) between the two seal line forming protruding portions 152 does not necessarily have to be rigid. For example, the slant inhibiting protruding portion 158c may be filled with the reinforcing frame 140, as shown in FIG. 12A, or the slant inhibiting protruding portion 158c may not be filled with the reinforcing frame 140, as shown in FIG. 12B. Further, the slant inhibiting protruding portion 158c does not have to be provided between the two seal line forming protruding portions 152, as shown in FIG. 12C. Using the structure in FIG. 12C, a resin member 144 may be arranged on the first joining portion 154 between the two projection portions 153, and made to function as the slant inhibiting portion 420. That is, the resin member 144 can be regarded as a slant inhibiting member of the present invention. In this way, slanting of the fuel cell 100 is able to be inhibited by providing the slant inhibiting protruding portion 158 (a slant inhibiting portion) also in the region where two seal lines are lined up.

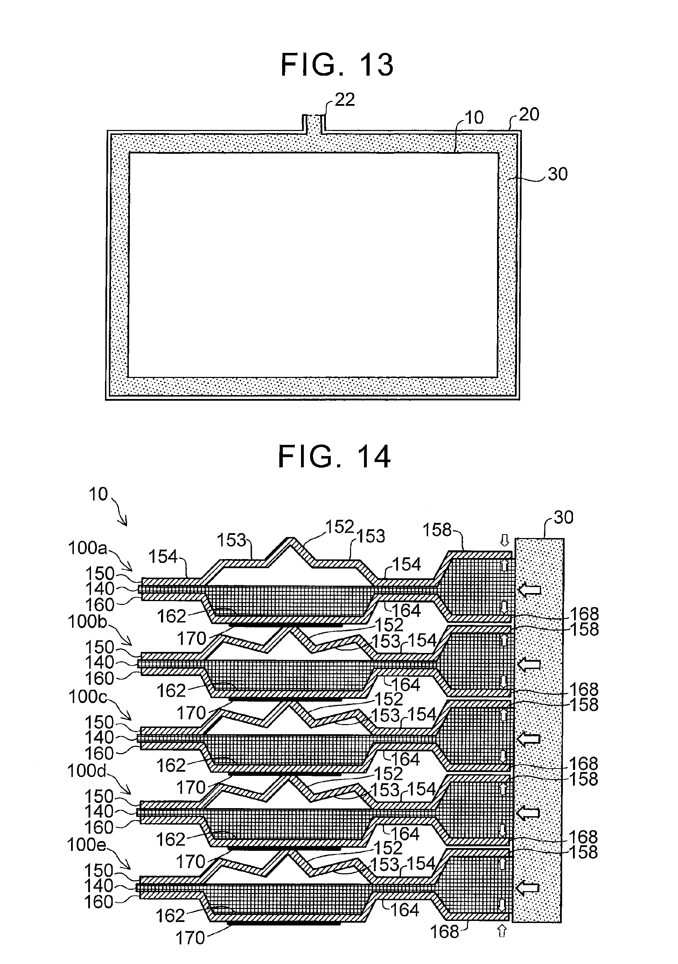

Fifth example embodiment: FIG. 13 is a view of the fuel cell stack 10 according to a fifth example embodiment of the invention. The fuel cell stack 10 is housed in a case 20 and mounted in a vehicle. An outer restraint member 30 is provided between the fuel cell stack 10 and the case 20. The outer restraint member 30 acts as a cushioning member and a restraint member so that the fuel cell 100 of the fuel cell stack 10 will not become misaligned when the vehicle provided with the fuel cell stack 10 receives an impact from the outside. The outer restraint member 30 is formed using small bodies with a small average diameter, e.g., sand, resin beads, or glass beads, which are made of insulating material. The small bodies that form the outer restraint member 30 are supplied between the case 20 and the fuel cell stack 10 from a small body supplying portion 22 provided on an upper portion of the case 20.

FIG. 14 is a view of an outer edge portion of the fuel cell stack 10 having the outer restraint member 30. In FIG. 14, there are five fuel cells 100 (100a to 100e). In this example embodiment, the outer restraint member 30 is arranged on the outer edges of the slant inhibiting protruding portions 158 and 168. However, the slant inhibiting protruding portion 168 of the second separator plate 160 of the fuel cell 100a may also be substantially contacting the slant inhibiting protruding portion 158 of the first separator plate 150 of the fuel cell 100b. For example, the slant inhibiting protruding portion 158 and the slant inhibiting protruding portion 168 may contact the outer restraint member 30 by using the slant inhibiting protruding portion 158 and the slant inhibiting protruding portion 168 in a constantly compressed and close-contact state. The space between the slant inhibiting protruding portion 158 and the slant inhibiting protruding portion 168 of the fuel cell 100a is filled with the reinforcing frame 140, and this reinforcing frame 140 extends to the outer restraint member 30. The same also applies to the other fuel cells 100b to 100e. When the vehicle provided with the fuel cell stack 10 receives force from an impact or the like from the outside, the fuel cells 100a to 100e receive force from the outer restraint member 30, and the separator plates 150 and 160 of the fuel cells 100a to 100e may deform. If the separator plates 150 and 160 deform slightly, the slant inhibiting protruding portion 168 of the second separator plate 160 of the fuel cell 100a will contact the slant inhibiting protruding portion 158 of the first separator plate 150 of the fuel cell 100b, or the slant inhibiting protruding portion 168 of the second separator plate 160 of the fuel cell 100b will contact the slant inhibiting protruding portion 158 of the first separator plate 150 of the fuel cell 100c, for example, and any further deformation will be suppressed. That is, the amount of deformation of the separator plates 150 and 160 is able to be kept small by the slant inhibiting protruding portion 158 contacting the slant inhibiting protruding portion 168 between adjacent fuel cells 100. Therefore, even if the fuel cells 100 (100a to 100e) happen to become misaligned and the separator plates 150 and 160 deform, the amount of deformation of the separator plates 150 and 160 is able to be kept small and slanting of the separator plates 150 and 160 is able to be inhibited. The reinforcing frame 140 may also extend to the outer restraint member 30 provided on the outside of the fuel cells 100, in order to inhibit the fuel cells 100 from becoming misaligned when the fuel cells 100 receive force from the outside.

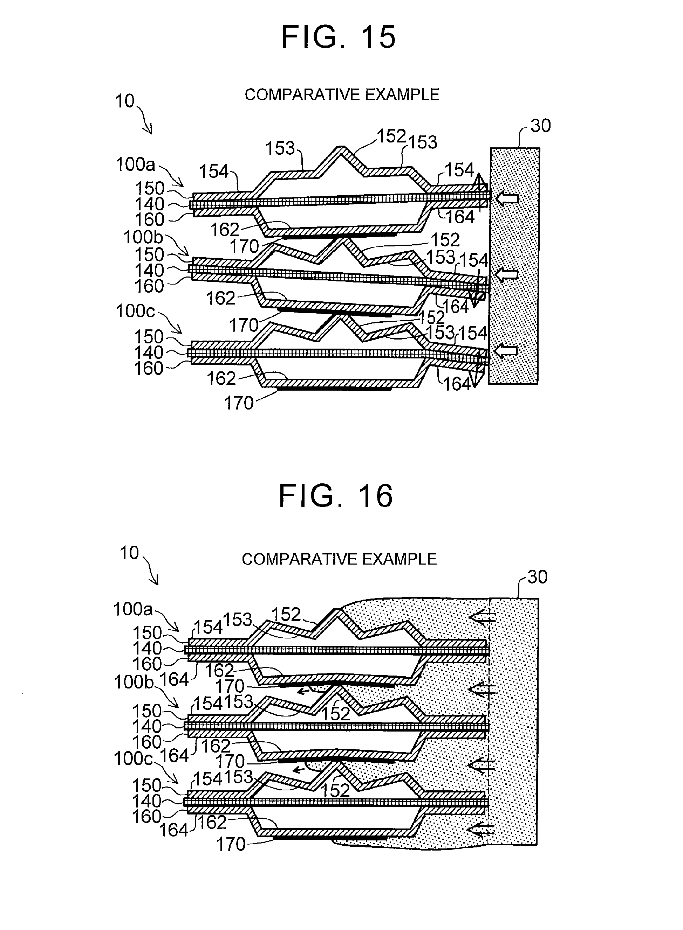

FIG. 15 is a view of an outer edge portion of the fuel cell stack 10 of a comparative example having the outer restraint member 30. The fuel cell stack 10 of the comparative example is not provided with the slant inhibiting protruding portion 158 or the slant inhibiting protruding portion 168. Therefore, in a position contacting the outer restraint member 30, the second separator plate 160 of the fuel cell 100a does not contact the first separator plate 150 of the fuel cell 100b, and the second separator plate 160 of the fuel cell 100b does not contact the first separator plate 150 of the fuel cell 100c. Thus, when the vehicle provided with the fuel cell stack 10 receives an impact from the outside, the fuel cells 100a to 100c receive force from the outer restraint member 30, and as a result, the fuel cell 100a may deform in the counterclockwise direction, and the fuel cells 100b and 100c may deform in the clockwise direction, for example.

FIG. 16 is a view of the outer edge portion of the fuel cell stack 10 of another comparative example having the outer restraint member 30. The structures of the fuel cell stack 10 and the outer restraint member 30 are the same as those in the example shown in FIG. 15. When the vehicle provided with the fuel cell stack 10 receives an impact from the outside, even if the fuel cells 100a to 100c do not deform, the small bodies of the outer restraint member 30 may get between the two fuel cells 100a and 100b, and between the two fuel cells 100b and 100c, and consequently impede sufficient reaction force from being generated between the seal line forming protruding portion 152 and the receiving portion 162, or reduce the seal between the seal line forming protruding portion 152 and the receiving portion 162. However, in this example embodiment (FIG. 14), the slant inhibiting protruding portion 168 of the second separator plate 160 of the fuel cell 100a is contacting the slant inhibiting protruding portion 158 of the first separator plate 150 of the fuel cell 100b. Further, the space between the slant inhibiting protruding portion 158 and the slant inhibiting protruding portion 168 is filled with the reinforcing frame 140, and the reinforcing frame 140 reaches all the way to the outer restraint member 30, so the small bodies of the outer restraint member 30 are able to be inhibited from getting between the two fuel cells 100a and 100b, and between the two fuel cells 100b and 100c.

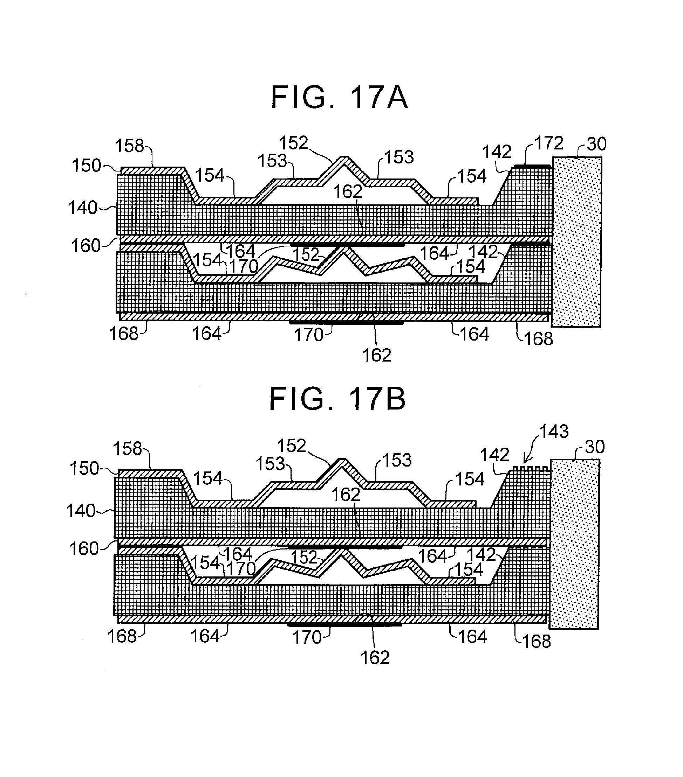

FIGS. 17A and 17B are views of a modified example of the fifth example embodiment. In this modified example, a protruding portion 142 is formed using the reinforcing frame 140, instead of providing the slant inhibiting protruding portion 158 on the outer restraint member 30 side of the first separator plate 150. The second separator plate 160 is flat, similar to that shown in FIG. 9A. A rubber sheet 172, as shown in FIG. 17A, may be arranged on the top portion of the protruding portion 142, or a patterned indented portion 143, as shown in FIG. 17B, may be formed on the top portion of the protruding portion 142. In these modes, the protruding portion 142, instead of the slant inhibiting protruding portion 158, functions as the slant inhibiting portion 420. Moreover, even if the vehicle provided with the fuel cell stack 10 is receives an impact from the outside and the fuel cells 100a to 100c receive force from the outer restraint member 30, the protruding portion 142 is contacting the second separator plate 160 of the adjacent fuel cell, so deformation of the fuel cells 100 is inhibited, and the small bodies of the outer restraint member 30 are inhibited from getting in between the fuel cells 100.

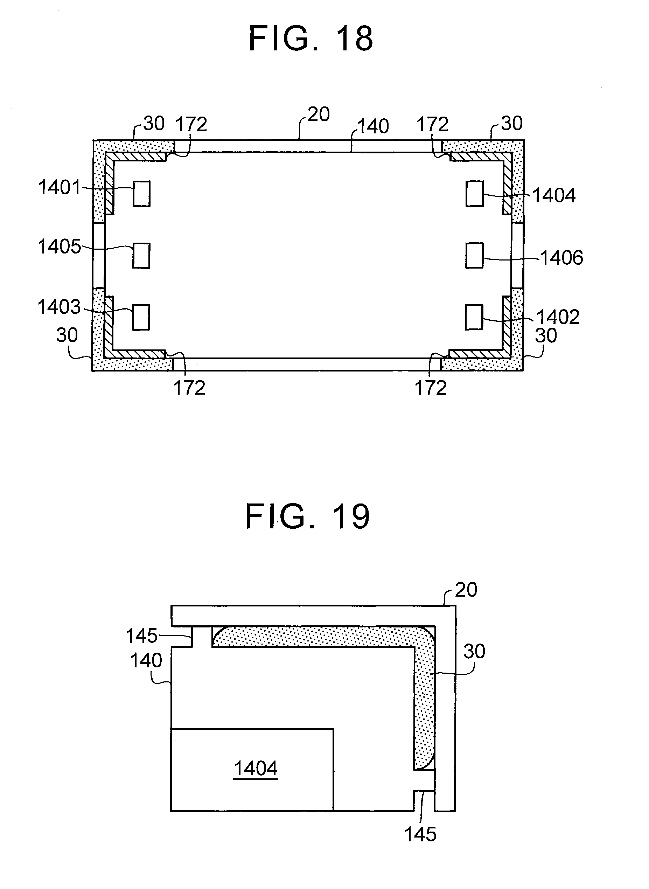

FIG. 18 is a plan view of the reinforcing frame 140 in FIG. 17A. In this mode, the outer restraint member 30 is provided only at the four corners of the reinforcing frame 140, not in the entire region of the case 20. In this case, the rubber sheet 172 arranged on the protruding portion 142 of the reinforcing frame 140 need be provided only in the portion adjacent to the outer restraint member 30, for example. The same also applies when forming the patterned indented portion 143 shown in FIG. 17B.

FIG. 19 is a view of a structure for providing the outer restraint member 30 only at the four corners of the reinforcing frame 140. The reinforcing frame 140 includes protruding members 145 for inhibiting the small bodies that form the outer restraint member 30 from going around, on the sides near the four corners. These protruding members 145 enable the small bodies to be supplied only to the four corners of the reinforcing frame 140, and not to the area near the center of each side of the reinforcing frame 140, when supplying the small bodies that form the outer restraint member 30 into the case 20. Providing the protruding members 145 on the reinforcing frame 140 in this way enables the small bodies that form the outer restraint member 30 to be formed only at the four corners of the reinforcing frame 140.

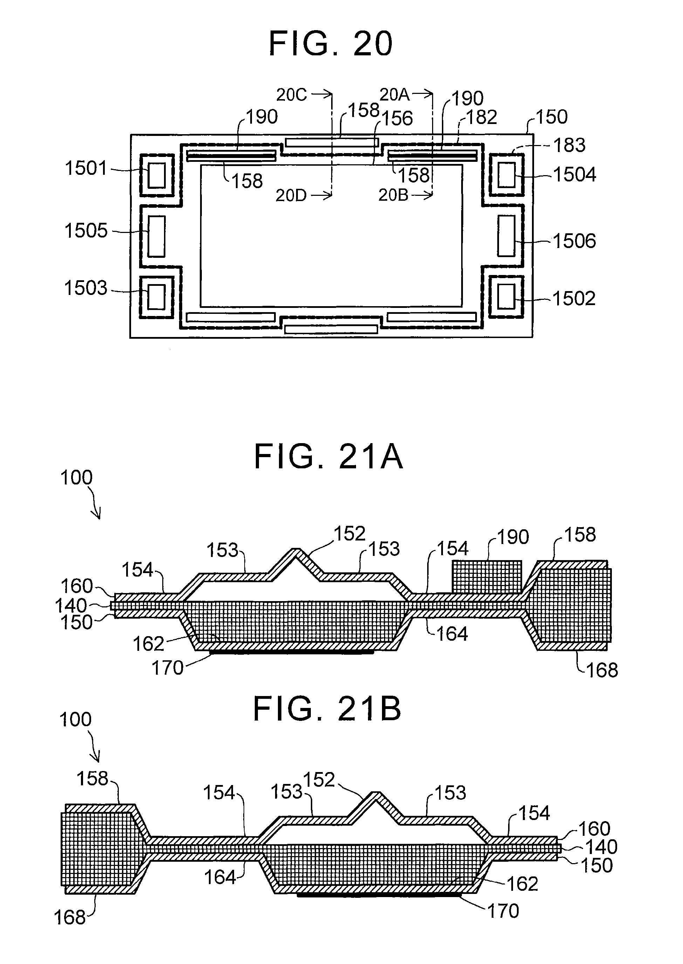

Sixth example embodiment: FIG. 20 is a view of the first separator plate 150 according to a sixth example embodiment of the invention. The first seal line 182 (formed by the seal line forming protruding portion 152) along the long side of the first separator plate 150 is to the inside of the slant inhibiting protruding portion 158 that forms the slant inhibiting portion 420, in the center portion of the long side, and to the outside of the slant inhibiting protruding portion 158 that forms the slant inhibiting portion 420, in a region sandwiching the center portion of the long side. Further, in the region sandwiching the center portion of the long side, a dam 190 is provided between the seal line forming protruding portion 152 and the slant inhibiting protruding portion 158.

FIGS. 21A and 21B are views of cross-sections when the fuel cell 100 is cut along line 20A - 20A and line 20B - 20B in FIG. 20. FIG. 21A is a view of the cross-section when the fuel cell 100 is cut along the line 20A - 20A in FIG. 20, and FIG. 21B is a view of the cross-section when the fuel cell 100 is cut along the line 20B - 20B in FIG. 20. The cross-section shown in FIG. 21B has the same structure as that shown in FIG. 4.

The fuel cell 100 includes the dam 190 on the opposite side of the first joining portion 154 from the reinforcing frame 140, between the seal line forming protruding portion 152 and the slant inhibiting protruding portion 158, as shown in FIG. 21A. The opposite side of the first joining portion 154 from the reinforcing frame 140, where the dam 190 is arranged, is to the inside (the MEA 110 side) of the first seal line 182 formed by the seal line forming protruding portion 152, and coolant flows here. When coolant flows here, the amount of coolant that flows through the flow path forming portion 156 is decreases, so the MEA 110 (FIG. 2) may no longer be able to be sufficiently cooled. According to this example embodiment, the dam 190 is provided on the first joining portion 154 on the MEA 110 side of the seal line forming protruding portion 152, between the seal line forming protruding portion 152 and the slant inhibiting protruding portion 158, so coolant is inhibited from bypassing and flowing over the first joining portion 154. As a result, the MEA 110 is able to be sufficiently cooled. Also, in addition to functioning as a dam, the dam 190 also assumes the function of the slant inhibiting portion 420 as a slant inhibiting member.

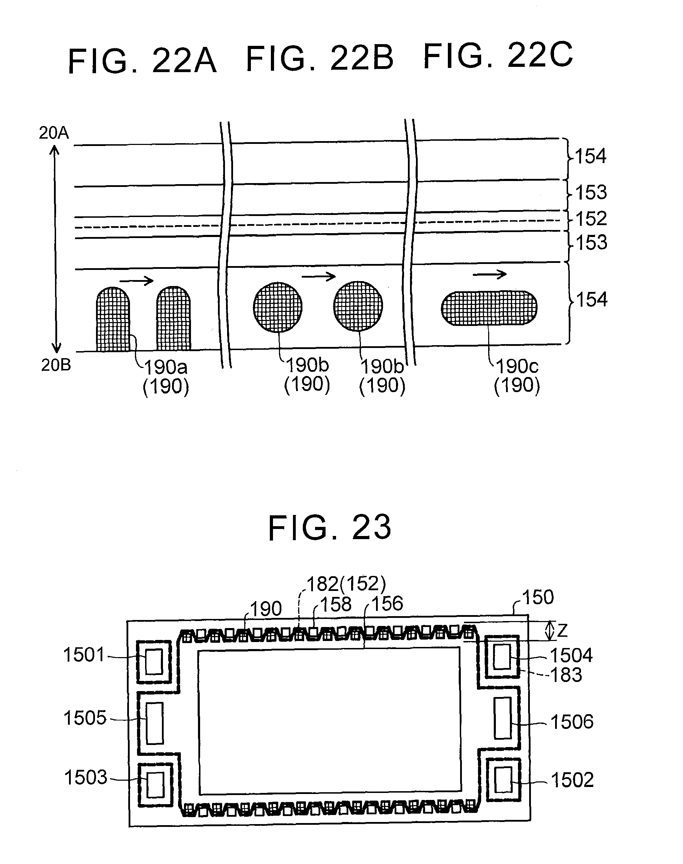

FIGS. 22A to 22C are views of examples of dam shapes. In the example shown in FIG. 22A, the shape of a dam 190a is semi-oval, and is orthogonal to the direction of flow of the fluid for which flow is preferably inhibited. In the example shown in FIG. 22B, the shape of a dam 190b is circular, with a plurality of circular dams 190b provided along the seal line forming protruding portion 152. In the example shown in FIG. 22C, the shape of a dam 190c is oval, and is parallel to the direction of flow of the fluid for which flow is preferably inhibited. In this way, the direction of the dam 190 may be orthogonal or parallel to the direction of flow of the fluid for which flow is preferably inhibited, or the dam 190 may be circular and not establish a direction. Also, the dams 190a to 190c do not have to completely stop the flow of fluid, as long as they reduce the amount of fluid that is bypassed to the first joining portion 154. The dam 190 is able to be easily formed by adhering resin such as urethane foam, or rubber, to the opposite side of the first joining portion 154 from the reinforcing frame 140, for example.

FIG. 23 is a view of a modified example of the sixth example embodiment. In this modified example, the seal line forming protruding portion 152 in a region along the long side of the first separator plate 150 meanders in a zigzag or wavy shape, similar to the example shown in FIGS. 11A to 11D. In addition, the slant inhibiting protruding portion 158 and the dam 190 are alternately provided. If the first seal line 182 (i.e., the seal line forming protruding portion 152) has a linear shape, reaction force may decrease due to the in-plane position, but if the first seal line 182 (i.e., the seal line forming protruding portion 152) has a zigzag or wavy shape, in-plane deviation of the reaction force is able to be mitigated. Also, in addition to making the first seal line 182 (i.e., the seal line forming protruding portion 152) meander in a zigzag or wavy shape, the slant inhibiting protruding portion 158 and the dam 190 are alternately provided, so the seal width Z is able to be reduced, and moreover, the bypass flow rate of fluid is able to be reduced.

As described above, the slant inhibiting portion 420 may be formed using the slant inhibiting protruding portions 158 and 168 of the separator plates, or formed by making the thickness of the reinforcing frame 140 thick. The slant inhibiting portion 420 may also be formed by arranging a resin member of urethane foam or rubber on the first joining portion 154. Further, the dam 190 may be arranged on the opposite side of the first joining portion 154 from the reinforcing frame, and this dam 190 may be made to function as the slant inhibiting portion 420. The slant inhibiting portion 420 may be formed using the slant inhibiting protruding portions 158 and 168 of the separator plates, and the dam 190 may also be provided on the opposite side of the first joining portion 154 from the reinforcing frame.

In the example embodiments described above, the rubber sheet 170 that forms the seal layer is arranged on the receiving portion 162, but the rubber sheet 170 may also be provided on the top portion of the seal line forming protruding portion 152. Also, the material of which the seal layer is formed is not limited to rubber. That is, a seal layer made of resin may be used instead of the rubber sheet 170. The seal layer (rubber sheet 170) does not have to be provided. Slanting of the separator plates 150 and 160 is able to be inhibited even without the seal layer.

While the invention has been described with reference to various example embodiments thereof, these example embodiments are intended to facilitate understanding of the invention. It is to be understood that the invention is not limited to the described embodiments or constructions, but may be embodied with various changes, modifications or improvements, without departing from the scope of the invention.

## Claims

1. A fuel cell comprising:
a membrane electrode assembly;
a reinforcing frame (140) that supports an outer edge portion of the membrane electrode assembly; and
a first separator plate and a second separator plate that sandwich the membrane electrode assembly and the reinforcing frame,
wherein
the first separator plate (150) includes
a seal line forming protruding portion (152) that is pressed against the second separator plate of an adjacently arranged fuel cell when the fuel cell is stacked, such that a seal line is formed; and
a first joining portion (154) provided on both sides of the seal line forming protruding portion;
the second separator plate (160) includes
a receiving portion (162) that is pressed against the seal line forming protruding portion of the first separator plate of an adjacently arranged fuel cell, such that the seal line is formed; and
a second joining portion (164) provided on both sides of the receiving portion; and
the fuel cell includes a slant inhibiting portion (158, 168) provided on at least one side of both sides of the seal line forming protruding portion (152) and the receiving portion (162).

2. The fuel cell according to claim 1, wherein
the first separator plate (150) includes a projection portion (153) provided between the seal line forming protruding portion (152) and the first joining portion (154).

3. The fuel cell according to claim 1 or 2, wherein
a distance between a top portion of the seal line forming protruding portion (152) and the receiving portion (162) is greater than a thickness of the slant inhibiting portion (158), in a stacking direction before the fuel cell is stacked.

4. The fuel cell according to claim 3, wherein
a height (H1) from the first joining portion (154) to the top portion of the seal line forming protruding portion (152) is higher than a height (H3) from the first joining portion (154) to the slant inhibiting portion (158), in the stacking direction before the fuel cell is stacked.

5. The fuel cell according to any one of claims 1 to 4, wherein
the slant inhibiting portion (158) is a portion of the first separator plate that protrudes in the same direction as a protruding direction of the seal line forming protruding portion (152), with respect to the first joining portion (154).

6. The fuel cell according to any one of claims 1 to 5, wherein
the slant inhibiting portion (168) is a portion of the second separator plate that protrudes in the opposite direction from a protruding direction of the seal line forming protruding portion (152), with respect to the second joining portion (164).

7. The fuel cell according to any one of claims 1 to 6, wherein
a space between the first separator plate (150) and the second separator plate (160) of the slant inhibiting portion is taken up by the reinforcing frame.

8. The fuel cell according to any one of claims 1 to 7, wherein
the reinforcing frame (140) extends to an outer restraint member (30) provided on an outside of the fuel cell.

9. The fuel cell according to any one of claims 1 to 8, wherein
the slant inhibiting portion is formed by the reinforcing frame (140).

10. The fuel cell according to any one of claims 1 to 9, wherein
the slant inhibiting portion is provided on the opposite side of the first joining portion (154) from the reinforcing frame or on the opposite side of the second joining portion (164) from the reinforcing frame.

11. The fuel cell according to any one of claims 1 to 10, further comprising:
a dam (190) provided on the opposite side of the first joining portion from the reinforcing frame, or on the opposite side of the second joining portion from the reinforcing frame.

12. The fuel cell according to claim 11, wherein
the dam (190) is arranged farther toward a membrane electrode assembly side than the seal line forming protruding portion.
